# EUROPEAN PATENT SPECIFICATION

(11) **EP 1 388 413 B1**
(45) Date of publication and mention of the grant of the patent: **22.08.2007**
(21) Application number: 03076777.6
(22) Date of filing: 06.06.2003
(51) Int. Cl.: B32B 17/10, E06B 3/66, C03C 27/12

(54) **Window pane, window provided with a window pane of this type, method for producing a window pane of this type, and its use**
Fensterscheibe, Fenster mit einer derartigen Fensterscheibe, Verfahren zur Herstellung einer derartigen Fensterscheibe und deren Verwendung
Vitre, fenêtre comprenant une telle vitre, procédé de fabrication d'une telle vitre, et son utilisation

(30) Priority: 12.06.2002 NL 1020845
(43) Date of publication of application: 11.02.2004
(73) Proprietor: Trompert, Michel Nicolas, 2597 VX 's Gravenhage (NL)
(72) Inventor: Trompert, Michel Nicolas, 2597 VX 's Gravenhage (NL)
(74) Representative: Mertens, Hans Victor

(56) References cited:
- DE-A- 2 011 211
- DE-A- 3 615 142
- DE-A- 4 013 253
- DE-A- 10 007 109
- DE-A- 19 607 031
- US-A- 5 073 181
- "Katalog: Historisches Fensterglas" HTTP, [Online] XP002264921 internet presentation of Schreiber-Berlin Retrieved from the Internet: <URL:http://www.restaurierungsglas.de/rest aurierungsglas.pdf> [retrieved on 2003-12-12]
- "Restoration Glass by Schott" HTTP, [Online] XP002264922 Product range Retrieved from the Internet: <URL:http://www.schott.com/architecture/en glish/products/restauration-glass/product_ range.html> [retrieved on 2003-12-12]

## Description

The invention relates to a window pane comprising a laminated structure of at least two glass plates.

Window panes which, in order to satisfy requirements relating to thermal insulation, sound insulation, heat-absorbing properties, bulletproofness, ability to withstand objects thrown at it, breaking resistance, protection against people falling through it and against people breaking in, comprise two or more glass plates instead of a single glass plate have long been in existence. Window panes of this type are normally referred to as "double glazing" or "laminated glass".

In the case of a double glazing window pane, there are usually two glass plates which are positioned parallel to and at a certain distance from one another, a metal spacer being arranged along the edges of the glass plates and the cavity which is enclosed by the glass plates and the spacer being filled with a gas, such as air.

The gas filling between the glass plates means that the glass plates tend to bend towards and away from one another slightly as a result of the fluctuating ambient air pressure. To present the glass plates from coming into contact with one another, it is necessary to maintain a certain distance between the glass plates, depending on the dimensions and rigidity of the glass plates, and consequently a double glazing window pane is relatively thick. For some applications, where the thickness of the window pane has to be limited, therefore, the use of double glazing presents difficulties. Furthermore, the metal spacer between the glass plates acts as a thermal bridge, with the result that annoying condensation can occur along the edges of the window pane in some applications.

In the case of a window pane made from laminated glass, there are usually two or more glass plates which are arranged parallel to and at a certain distance from one another, a relatively thin layer of resin and/or a film being arranged between the glass plates, connecting the glass plates to one another. As a result of the use of a thin layer of resin and/or a film, it is possible for laminated glass to be considerably thinner than double glazing for the same thickness of each of the glass plates from which it is formed.

In sash windows and other windows in historic buildings (including new buildings made to look historical), it is and has been traditional to use a single glass plate made from traditional glass, such as spun glass (i.e. disc or crown glass), cylinder glass, drawn glass, cast glass or glass which has a similar structure. A glass plate made from traditional glass has an irregular surface which is particularly suitable for the historic nature of the building in question.

In order to improve the thermal insulation, the sound insulation, the heat-absorbing properties, the bulletproofness, the ability to withstand objects thrown at them, the breaking resistance, the protection against people falling through them and breaking in through them for window panes of historic buildings during restoration and maintenance work, consideration is given to using two or more glass plates instead of one glass plate in the windows.

However, the known double glazing window panes are not satisfactory, since the rebates and wood sizes of the windows are not able to accommodate the relatively thick double glazing. However, were the windows to be made suitable for receiving the double glazing, each window pane would acquire four reflection surfaces, which is considered to be at least disagreeable and in some cases even unacceptable. Moreover, the glass plates of the double glazing are usually made from what is known as float glass (i.e. glass which is (virtually) 100% flat and therefore gives scarcely any visual distortion), which on account of its flat surface would have an adverse effect on the historic character of the building in question when used in double glazing.

The known window panes made from laminated glass are also unsatisfactory. Although they are thinner than double glazing window panes, meaning that they require fewer or no modifications to the wood sizes of the windows, these window panes too are made from float glass and consequently are not in keeping with the historic nature of the building in question.

DE-A-19607031 discloses a window pane comprising a laminated structure of a glass plate made from float glass, and a glass plate made from traditional glass.

It is an object of the invention to provide a window pane having two or more glass plates which has the associated advantageous properties of thermal insulation, sound insulation, heat-absorbing properties, bulletproofness, ability to withstand objects thrown at it, breaking resistance, protection against people falling through it and against people breaking in, and can also enhance the historic nature of buildings.

To achieve this object, the window pane according to the invention comprises a laminated structure of at least two glass plates, wherein at least one of the glass plates is made from traditional glass, and at least another one of the glass plates is made from float glass, and is characterized according to claim 1. A layer of resin and/or a film is advantageously arranged between two successive glass plates. A window pane of this type is preferably arranged in a window, in particular a sash window, in such a manner that the glass plate which is made from traditional glass is on the outside of the building. Therefore, the outside of the historic building looks authentic, while a modern composite glazing with the associated technical advantages is still used. The view through the window from the inside of the historic building is also authentic. The window pane does not have a thermal bridge, preventing the formation of condensation. There are also no undesirable reflections.

Making just one of the glass plates from traditional glass limits the risk of breaking: the relatively fragile traditional glass is protected on one side by the less fragile resin and/or film and furthermore can be reinforced by the use of one or more glass plates made from float glass.

If a layer of resin and/or a film is located between the glass plates in the window pane according to the invention, a design of this type has a relatively low thickness, and can therefore generally be fitted without additional measures in conventional wood sizes of a window of a historic building.

In another preferred embodiment, the window pane forms part of double glazing. In this case, a space which is filled with a gas, such as air, may be located between the window pane according to the invention and a glass plate, but of course it is also possible to use a laminated structure comprising a plurality of glass plates instead of the glass plate, in which case at least one glass plate is made from traditional glass. This makes it possible to achieve an even higher level of insulation of the window, in particular where the window has a large surface area.

The window pane according to the invention can incidentally be produced in an essentially conventional way as laminated glass or double glazing.

Other claims, characteristic features and advantages of the invention will be become clear on the basis of the appended drawing, which shows non-limiting exemplary embodiments and in which:
Fig. 1 shows a cross section through a first embodiment of the window pane according to the invention designed as laminated glass;
Fig. 1a shows a cross section through a second embodiment of the window pane according to the invention designed as laminated glass; and
Fig. 2 shows a cross section through a third embodiment of the window pane according to the invention designed as double glazing.

Throughout the various figures, identical reference symbols relate to identical components or components with an identical function.

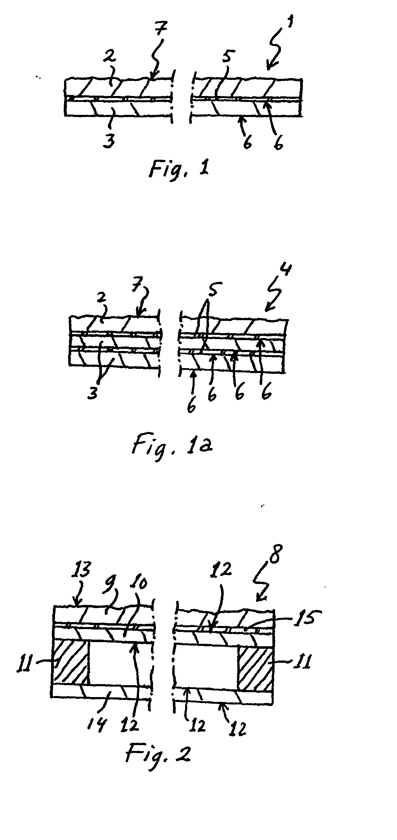

Fig. 1 shows a laminated window pane 1 which comprises a glass plate 2 and a glass plate 3. Between the glass plates 2 and 3 there is a layer of resin and/or a film 5, which is transparent. The glass plate 2 is made from traditional glass, and the glass plate 3 is usually made from float glass. On one of the sides denoted by 6, the glass plate 3 is provided with a heat-resistant, substantially transparent coating. The side of the glass plate 2 which is denoted by 7 is intended to face towards the outside of a window.

The laminated window pane 1 may be produced by arranging an optionally curing resin and/or film 5 on one side of the glass plate 2, in order to form a layer of resin and/or film on the glass plate 2, and placing the glass plate 3 onto the layer of resin and/or film.

Fig. 1a shows a window pane 4 which is composed of more than two glass plates 2, 3.

Fig. 2 shows a window pane 8 of the "double glazing" type, which comprises glass plates 9, 10 and 14 as well as a spacer 11. The spacer 11 is usually made substantially from metal. The glass plates 9 and 10, on the one hand, and the glass plate 14, on the other hand, are arranged at a distance from one another. A gas, such as air, is located in the space which is delimited by the glass plates 10 and 14 and the spacer 11. The glass plate 9 is made from traditional glass, and the glass plates 10 and 14 are made from float glass. There is a layer of resin and/or a film 15 between the glass plates 9 and 10. On one of the sides denoted by 12, the glass plate 10 and/or the glass plate 14 is provided with a heat-resistant, substantially transparent coating. That side of the glass plate 9 which is denoted by 13 is intended to face towards the outside of the window.

The window pane 8 can be made by applying the layer of resin and/or the film 15 to the glass plate 9 and placing the glass plate 10 onto the layer of resin and/or the film 15. The spacer 11, in the form of a substantially continuous strip, is arranged along the periphery of that side of the glass plate 10 which is remote from the glass plate 9, and then the glass plate 14 is placed on the spacer 11, and the space enclosed by the glass plates 10, 14 and the spacer 11 is sealed off with a gas filling.

It should be noted that where the text refers to traditional glass, this term is to be understood to include also glass which has not been produced in a traditional way but which does have the appearance of having been produced in this way.

## Claims

1. Window pane (1; 8), comprising a laminated structure of at least two glass plates, wherein at least one of the glass plates (3; 10, 14) is made from float glass, and at least another one of the glass plates (2; 9) is made from traditional glass, such as spun glass, cylinder glass, drawn glass, cast glass or glass with a similar structure, **characterized in that** a heat-resistant covering layer is arranged on one side of at least one glass plate (3; 10, 14) made from float glass.

2. Window pane according to claim 1, **characterized in that** there is a layer (5; 15) of resin between two successive glass plates.

3. Window pane according to claim 1, **characterized in that** there is a film (5; 15) between two successive glass plates.

4. Window pane according to claim 1, **characterized in that** it forms part of double glazing.

5. Window provided with at least one window pane (1; 8), said window pane comprising a laminated structure of at least two glass plates, wherein at least one of the glass plates (2; 9) is made from traditional glass, such as spun glass, cylinder glass, drawn glass, cast glass or glass with a similar structure, and at least another one of the glass plates (3; 10, 14) is made from float glass, **characterized in that** a heat-resistant covering layer is arranged on one side of at least one glass plate (3; 10, 14) made from float glass.

6. Method for producing a window pane (1; 8), comprising the stacking of at least two glass plates with a layer of resin and/or a film between them, wherein at least one of the glass plates (2; 9) is made from traditional glass, and at least another one of the glass plates (3; 10, 14) is made from float glass, **characterized in that** a heat-resistant covering layer is arranged on one side of at least one glass plate (3; 10, 14) made from float glass.

7. Method for producing a window pane according to claim 6, further comprising a spacer (11) in the form of a substantially continuous strip which is arranged along the periphery of the window pane, and a subsequent glass plate or window pane is arranged on the spacer.

8. Method according to claim 7, **characterized in that** the space enclosed by the window pane, the glass plate and the spacer, or the space enclosed by the two window panes and the spacer, is filled with a gas, such as air.

9. Use of a window pane (1; 8) in a window, in particular a sash window, of a historic building, the window pane comprising a laminated structure of at least two glass plates, wherein at least one of the glass plates (2; 9) is made from traditional glass, such as spun glass, cylinder glass, drawn glass, cast glass or glass with a similar structure, and at least another one of the glass plates (3; 10, 14) is made from float glass, **characterized in that** a heat-resistant covering layer is arranged on one side of at least one glass plate (3; 10, 14) made from float glass.

10. Use according to claim 9, **characterized in that** the glass plate made of traditional glass is located on the outside of the building.

## Patentansprüche

1. Fensterscheibe (1; 8), umfassend eine laminierte Struktur aus wenigstens zwei Glasscheiben, wobei wenigstens eine der Glasscheiben (3; 10, 14) aus Floatglas hergestellt ist und wenigstens eine der anderen Glasscheiben (2; 9) aus herkömmlichem Glas, wie Schleuderglas, Zylinderglas, Ziehglas, Gußglas oder aus einem Glas mit einer ähnlichen Struktur besteht, **dadurch gekennzeichnet, dass** eine wärme-resistente Abdeckschicht auf einer Seite wenigstens einer aus Floatglas hergestellten Glasscheibe (3; 10,14) angeordnet ist.

2. Fensterscheibe nach Anspruch 1, **dadurch gekennzeichnet, dass** sich eine Kunstharzschicht (5; 15) zwischen zwei benachbarten Glasscheiben befindet.

3. Fensterscheibe nach Anspruch 1, **dadurch gekennzeichnet, dass** sich eine Folie (5; 15) zwischen zwei benachbarten Glasscheiben befindet.

4. Fensterscheiben nach Anspruch 1, **dadurch gekennzeichnet, dass** sie Teil einer Doppel-Verglasung bildet.

5. Fenster, versehen mit wenigstens einer Fensterscheibe (1; 8), die wenigstens eine laminierte Struktur von wenigstens zwei Glasscheiben umfasst, wobei wenigstens eine der Glasscheiben (2; 9) aus herkömmlichem Glas, wie Faserglas, geblasenem Flachglas, Ziehglas, Gussglas oder einem Glas mit einer ähnlichen Struktur hergestellt ist, und wenigstens eine andere der Glasscheiben (3; 10,14) aus Floatglas hergestellt ist, **dadurch gekennzeichnet, dass** eine wärme-resistente Abdeckschicht auf einer Seite wenigstens einer der aus Floatglas hergestellten Glasscheiben (3; 10,14) angeordnet ist.

6. Verfahren zur Herstellung einer Fensterscheibe (1; 8), umfassend das Schichten von wenigstens zwei Glasscheiben mit einer Schicht aus Kunstharz und/oder einer Folie zwischen ihnen, wobei wenigstens eine der Glasscheiben (2; 9) aus herkömmlichem Glas hergestellt ist, und wenigstens eine andere der Glasscheiben (3; 10,14) aus Floatglas hergestellt ist, **dadurch gekennzeichnet, dass** eine wärme-resistente Abdeckschicht auf einer Seite wenigstens einer der aus Floatglas hergestellten Glasscheiben (3; 10,14) aus Floatglas angeordnet ist.

7. Verfahren zur Herstellung einer Fensterscheibe nach Anspruch 6, **dadurch gekennzeichnet, dass** [die Fensterscheibe] einen Abstandhalter (11) in Form eines im Wesentlichen durchgehenden Streifens umfasst, der entlang des Umfanges der Fensterscheibe angeordnet ist, und dass eine benachbarte Glasscheibe oder Fensterscheibe auf dem Abstandshalter angeordnet ist.

8. Verfahren nach Anspruch 7, **dadurch gekennzeichnet, dass** der Raum, der von der Fensterscheibe, der Glasscheibe und dem Abstandshalter umschlossen ist, oder der Zwischenraum, der von den beiden Fensterscheiben und dem Abstandshalter umschlossen ist, mit einem Gas, beispielsweise Luft, gefüllt ist.

9. Verwendung einer Fensterscheibe (1; 8) in einem Fenster, insbesondere einem Fall- oder Schiebefenster eines historischen Gebäudes, wobei die Fensterscheibe eine laminierte Struktur aus wenigstens zwei Glasscheiben umfasst, wobei wenigstens eine der Glasscheiben (2; 9) aus herkömmlichem Glas, wie Faserglas, geblasenem Flachglas, Ziehglas, Gussglas oder Glas mit einer ähnlichen Struktur hergestellt ist, und wenigstens eine andere der Glasscheiben (3; 10, 14) aus Floatglas hergestellt ist, **dadurch gekennzeichnet, dass** eine wärme-resistente Abdeckschicht auf einer Seite wenigstens einer der aus Floatglas hergestellten Glasscheibe (3; 10, 14) angeordnet ist.

10. Verwendung nach Anspruch 9, **dadurch gekennzeichnet, dass** die Glasscheibe aus herkömmlichem Glas auf der Außenseite des Gebäudes angeordnet ist.

## Revendications

1. Vitre (1, 8) comprenant une structure feuilletée d'au moins deux glaces de verre, dans laquelle au moins l'une des glaces (3, 10, 14) de verre est en verre flotté et au moins une autre des glaces (2, 9) de verre est en verre traditionnel, tel qu'en verre en couronne, en verre en cylindre, en verre étiré, en verre coulé ou en verre ayant une structure semblable, **caractérisée en ce qu'**une couche calorifuge de recouvrement est disposée sur une face d'au moins une glace (3, 10, 14) de verre en verre flotté.

2. Vitre suivant la revendication 1, **caractérisée en ce qu'**il y a une couche (5, 15) de résine entre deux glaces de verre successives.

3. Vitre suivant la revendication 1, **caractérisée en ce qu'**il y a une pellicule (5, 15) entre deux glaces de verre successives.

4. Vitre suivant la revendication 1, **caractérisée en ce qu'**elle forme une partie d'un double vitrage.

5. Fenêtre munie d'au moins une vitre (1, 8), la vitre comprenant une structure feuilletée d'au moins deux glaces de verre, dans laquelle au moins l'une des glaces (3, 10, 14) de verre est en verre flotté et au moins une autre des glaces (2, 9) de verre est en verre traditionnel, tel qu'en verre en couronne, en verre en cylindre, en verre étiré, en verre coulé ou en verre ayant une structure semblable, **caractérisée en ce qu'**une couche calorifuge de recouvrement est disposée sur une face d'au moins une glace (3, 10, 14) de verre en verre flotté.

6. Procédé de fabrication d'une vitre (1, 8) comprenant l'empilage d'au moins deux glaces de verre avec une couche de résine et/ou une pellicule entre elles, au moins l'une des glaces (2, 9) de verre étant en un verre traditionnel et au moins une autre des glaces (3, 10, 14) de verre étant en verre flotté, **caractérisé en ce qu'**une couche calorifuge de recouvrement est disposée sur une face d'au moins une glace (3, 10, 14) de verre en verre flotté.

7. Procédé de fabrication d'une vitre suivant la revendication 6, comprenant en outre un intercalaire (11) sous la forme d'une bande sensiblement continue,qui est disposé le long du pourtour de la vitre, et une glace de verre ou une vitre suivante est disposée sur l'intercalaire.

8. Procédé suivant la revendication 7, **caractérisé en ce que** l'espace enfermé par la vitre, la glace de verre et l'intercalaire, ou l'espace enfermé par les deux vitres et l'intercalaire est empli d'un gaz, tel que d'air.

9. Utilisation d'une vitre (1, 8) dans une fenêtre, en particulier une fenêtre à guillotine, d'un bâtiment historique, la vitre comprenant une structure feuilletée d'au moins deux glaces de verre, dans laquelle au moins l'une des glaces (3, 10, 14) de verre est en verre flotté et au moins une autre des glaces (2, 9) de verre est en verre traditionnel, tel qu'en verre en couronne, en verre en cylindre, en verre étiré, en verre coulé ou en verre ayant une structure semblable, **caractérisée en ce qu'**une couche calorifuge de recouvrement est disposée sur une face d'au moins une glace (3, 10, 14) de verre en verre flotté.

10. Utilisation suivant la revendication 9, **caractérisée en ce que** la glace de verre en verre traditionnel est disposée à l'extérieur du bâtiment.
